# EUROPÄISCHE PATENTSCHRIFT

(11) **EP 2 231 473 B1**
(45) Veröffentlichungstag und Bekanntmachung des Hinweises auf die Patenterteilung: **15.04.2015**
(21) Anmeldenummer: 09703098.5
(22) Anmeldetag: 07.01.2009
(51) Int. Cl.: B63B 29/04, B64D 11/06, B60N 2/24, B60N 2/42

(54) **AN VERTIKAL VERLAUFENDEN HALTEGURTSCHLAUFEN AUFGEHÄNGTER SICHERHEITSSITZ**
SAFETY SEAT SUSPENDED ON VERTICALLY EXTENDING RETAINING STRAP LOOPS
SIÈGE DE SÉCURITÉ SUSPENDU À DES BOUCLES DE SANGLE DE MAINTIEN S'ÉTENDANT VERTICALEMENT

(30) Priorität: 21.01.2008 DE 102008005422
(43) Veröffentlichungstag der Anmeldung: 29.09.2010
(73) Patentinhaber: AUTOFLUG GMBH, 25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2009/000022
(87) Internationale Veröffentlichungsnummer: WO 2009/092510

(56) Entgegenhaltungen:
- EP-A- 1 398 205
- DE-B3-102004 009 557
- DE-B3-102004 062 350
- US-A- 4 474 347

## Beschreibung

Die Erfindung betrifft einen Sicherheitssitz für Land-, Luft- und Seefahrzeuge mit wenigstens einem Sitzteil, welches an zwei jeweils im Bereich der hinteren Sitzteilkante verlaufenden, vertikalen und fahrzeugseitig befestigten Haltegurten festgelegt ist.

Ein Sicherheitssitz mit den vorgenannten Merkmalen ist aus der DE 102004062350 B3 bekannt, die den nächstliegenden Stand der Technik darstellt und den Oberbegriff des Anspruchs 1 offenbart. Hierbei ist der als druckfestes Bauteil ausgeführte Sitzteil jeweils an vertikal zwischen dem Fahrzeugdach und dem Fahrzeugboden aufgespannten Haltegurten befestigt, indem der Sitzteil mittels zusätzlich angeordneter, mit den vertikalen Haltegurten verbundener und mit diesen ein Gurtgerüst zur Halterung des Sitzteils bildender seitlicher Traggurte an den vertikalen Haltegurten festgelegt ist. Dabei bestehen die seitlichen Traggurte aus einem von einer unteren ortsfesten Befestigungsstelle längs der Seitenränder des Sitzteils bis zu dessen vorderen Eckpunkten verlaufenden Gurtabschnitten, wobei von den vorderen Eckpunkten des Sitzteils jeweils ein weiterer schräg zur Hochachse des Fahrzeugsitzes verlaufender Gurtabschnitt zu einer oberhalb liegenden ortsfesten Befestigungsstelle an dem zugeordneten vertikalen Haltegurt zurückgeführt ist. Somit ist der als druckfestes Bauteil ausgebildete Sitzteil so in das aus vertikalen Haltegurten und Traggurten gebildete Gurtgerüst eingesetzt, dass der Sitzteil das Gurtgerüst selbsttätig aufspannt. Dabei ist nach einem Ausführungsbeispiel zusätzlich vorgesehen, dass der Sitzteil in dem Gurtgerüst hochklappbar ist, wobei das Hochklappen durch ein Anheben des rückwärtigen Endes des Sitzteils mittels eines gesonderten Betätigungsseils erfolgt.

Mit dem bekannten Sicherheitssitz ist der Nachteil verbunden, dass die seitlichen Traggurte einen auf dem Sicherheitssitz sitzenden Insassen seitlich einfassen, so dass der Insasse sich beim Aufstehen nur nach vorne erheben und sich auch nur aus einer vor dem Sitz stehenden Position heraus auf den Sitz setzen kann. Es kommen jedoch häufig Anwendungsfälle vor, bei denen eine Mehrzahl von Sitzen nebeneinander in einer in der Fahrtrichtung des Fahrzeuges ausgerichteten Reihe angeordnet sind, wobei die Insassen insbesondere beim Aussteigen seitlich über die nebeneinander angeordneten Sitze rutschen und das Fahrzeug vom letzten Sitz der Reihe aus verlassen.

Der Erfindung liegt daher die Aufgabe zugrunde, einen Sicherheitssitz mit den eingangs genannten Merkmalen so zu verbessern, dass bei einer nach wie vor gegebenen Halterung des Sitzteils an einem Gurtgerüst seitlich des Sitzteils keine eine Bewegung des Insassen hindernden Einbauten vorhanden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Sicherheitssitz einen das Sitzteil bildenden Sitzteilrahmen und einen damit verbundenen, im Winkel dazu stehenden und eine Rückenlehne ausbildenden Rückenlehnenrahmen umfasst und jeder Haltegurt als eine zwischen in einem vertikalen Abstand zueinander angeordneten fahrzeugfesten Verankerungen aufgespannte Gurtschlinge mit einem dem Sicherheitssitz zugewandten Vordergurt und einem mit Abstand dazu verlaufenden Hintergurt ausgebildet ist, wobei Vordergurt und Hintergurt jeweils im Wechsel über die obere Querstrebe sowie die im Bereich des Sitzteilrahmens angeordnete untere Querstrebe des Rückenlehnenrahmens geführt sind derart, dass Vordergurt und Hintergurt bei gespannter Gurtschlinge die Querstreben zwischen sich einklemmen, und dass der Rückenlehnenrahmen an wenigstens einem an einer vertikal oberhalb des Sicherheitssitzes angeordneten fahrzeugfesten Verankerung befestigten Fanggurt aufgehängt ist.

Mit der Erfindung ist der Vorteil verbunden, dass der Sicherheitssitz an den vertikal aufgespannten Haltegurten schon dadurch festgelegt ist, dass die mit entsprechender Vorspannung installierten Haltegurtschlingen mit ihren Vorder- und Hintergurten die zugeordneten Querstreben des Sicherheitssitzes zwischen sich einklemmen; die mittels dieser Beklemmung aufgebrachten Haltekräfte reichen im Grundsatz bereits aus, den Sicherheitssitz ohne weitere Einbauten an den vertikalen Haltegurten festzulegen, so dass insbesondere keine seitlichen Abstützungen erforderlich sind. Dabei ist es aufgrund des erfindungsgemäßen Verlaufs von Vordergurten und Hintergurten in einfacher Weise möglich, den Sicherheitssitz in unterschiedlichen Höhenlagen, also jeweils in einem unterschiedlichen Abstand zum Fahrzeugboden, festzulegen. Aus Sicherheitsgründen sieht die Erfindung zusätzlich vor, den Sicherheitssitz mittels eines an einer vertikal oberhalb des Sicherheitssitzes angeordneten fahrzeugfesten Verankerung befestigten Fanggurtes aufzuhängen, so dass durch die Bemessung der Länge des Fanggurtes einerseits die Einbaulage des Sicherheitssitzes fest vorgegeben ist und andererseits auch eine entsprechend große Belastung des Sicherheitssitzes nicht zu dessen unbeabsichtigter Verschiebung längs der Haltegurtschlingen führt.

Die erfindungsgemäße Art der Festlegung des Sitzteils an einem fahrzeugseitig aufgespannten Gurtgerüst gewährleistet weiterhin in vorteilhafter Weise, dass in der Vertikalrichtung, also in der "Z"-Richtung eines Fahrzeuges, einwirkende, beispielsweise durch Minenansprengungen verursachte Stöße von den Haltegurtschlingen wie auch von den Fanggurten aufgenommen werden. Insgesamt wirkt sich eine Erhöhung der auf den Sicherheitssitz einwirkenden vertikalen Kräfte daher nur in einer sehr geringen vertikalen Lageveränderung des Sicherheitssitzes aus, wobei eine Dämpfung der einwirkenden vertikalen Kräfte durch die Dehnungseigenschaften der eingesetzten Gurte gegeben ist. Weiterhin ergeben sich bei dem erfindungsgemäßen Sicherheitssitz noch die Vorteile, dass nur wenige, einfache und daher preisgünstige Komponenten erforderlich sind, wobei auf bekannte Komponenten und Werkstoffe zurückgegriffen werden kann. Der Sicherheitssitz weist ein nur geringes Bauvolumen bei gleichzeitig geringem Gewicht auf, wobei sich der Sicherheitssitz gleichzeitig aber durch eine hohe Steifigkeit und eine gute Belastbarkeit in allen Lastrichtungen auszeichnet. Zudem ist der Sicherheitssitz in einfacher Weise in bestehenden Fahrzeugen nachrüstbar.

Nach einem Ausführungsbeispiel der Erfindung ist vorgesehen, dass zwei den jeweiligen Haltegurten zugeordnete Fanggurte angeordnet sind.

Neben der Fixierung der Sicherheitssitze an den Halteschlingen können die Fanggurte für eine definierte Führung eines fahrzeugfest angeschlagenen Schultergurtes eines sitzseitigen Sicherheitsgurtsystems herangezogen werden, indem ein Fanggurt eine Durchführung für den Schultergurt aufweist. In einer Fortbildung des Erfindungsgegenstandes kann dann vorgesehen sein, dass bei Ausbildung des sitzseitigen Sicherheitsgurtsystems mit einem Hosenträgergurt beide Fanggurte jeweils eine Durchführung für den zugeordneten Schultergurt des Sicherheitsgurtsystems aufweisen.

In einer einfachen Ausführungsform der Erfindung kann vorgesehen sein, dass Sitzteilrahmen und Rückenlehnenrahmen eine gemeinsame Querstrebe aufweisen, so dass Vordergurt und Hintergurt der Haltegurtschlinge jeweils die obere Querstrebe des Rückenlehnenrahmens und die gemeinsame Querstrebe von Sitzrahmen und Rückenlehnenrahmen zwischen sich einklemmen. Dabei kann ergänzend vorgesehen sein, dass der Sitzteilrahmen gegenüber der gemeinsamen Querstrebe schwenkbar angeordnet ist.

Alternativ ist es auch möglich, dass Sitzteilrahmen und Rückenlehnenrahmen getrennte, parallel und benachbart zueinander ausgerichtete Querstreben aufweisen.

Bei einer solchen Ausgestaltung kann in alternativen Ausführungsformen der Erfindung vorgesehen sein, dass Vordergurt und Hintergurt der Gurtschlinge lediglich über die Querstreben des Rückenlehnenrahmens geführt sind, oder dass Vordergurt und Hintergurt beide, einander benachbart angeordneten Querstreben von Sitzteilrahmen und Rückenlehnenrahmen zwischen sich einfassen beziehungsweise einklemmen.

Hierbei kann vorgesehen sein, dass die hintere Querstrebe des Sitzteilrahmens auf der dem Sitzteil zugewandten Seite der Querstrebe des Rückenlehnenrahmens angeordnet ist. Alternativ kann vorgesehen sein, dass der Sitzteilrahmen über die zugeordnete Querstrebe des Rückenlehnenrahmens hinaus verlängert und die hintere Querstrebe des Sitzteilrahmens auf der dem Sitzteil abgewandten Seite des Rückenlehnenrahmens angeordnet ist. Mit einer solchen Ausführung ist der Vorteil verbunden, dass ein Hochklappen des Sitzteilrahmens gegenüber dem Rückenlehnenrahmen möglich ist, wobei aufgrund der Anordnung der Querstrebe des Sitzteilrahmens hinter der Querstrebe des Rückenteilrahmens eine Selbsthaltewirkung für den Sitzteilrahmen in der hochgeklappten Stellung gegeben ist. Hierbei kann es sich als vorteilhaft erweisen, wenn der Sitzteilrahmen über eine Drehverbindung mit der unteren Querstrebe des Rückenlehnenrahmens verbunden ist.

Zur besseren Anpassung der Anordnung des Sicherheitssitzes an die Gegebenheiten eines Fahrzeuges ist nach einem Ausführungsbeispiel vorgesehen, dass jeder Fanggurt mit einer Verstellvorrichtung zur Anpassung der Länge des zwischen der oberen fahrzeugfesten Verankerung und der oberen Querstrebe des Rückenlehnenrahmens verlaufenden Fanggurtes angeordnet ist. Somit ist bei einer standardisierten Ausführung von Haltegurtschlingen und Fanggurten ein Einsatz bei beliebigen Fahrzeugabmessungen möglich.

Es kann vorgesehen sein, dass zur Aufbringung einer Vorspannung in den Verlauf jeder Gurtschlinge eine Spannvorrichtung eingeschaltet ist, mittels der die für die Aufbringung der Beklemmung der Teile des Sicherheitssitzes erforderliche Vorspannung erzeugt werden kann.

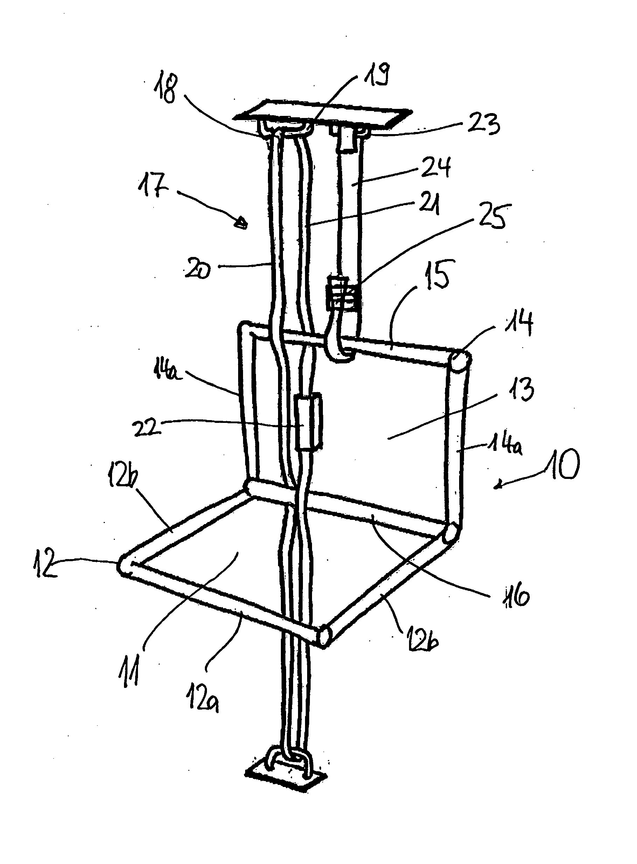

In der Zeichnung ist ein Ausführungsbeispiel der Erfindung wiedergegeben, welches nachstehend beschrieben ist. Die einzige Figur zeigt einen Sicherheitssitz mit zugehöriger Haltegurtanordnung in einer schematisierten Ansicht.

Der in der Zeichnung dargestellte Sicherheitssitz 10 weist zunächst einen einen Sitzteil 11 bildenden Sitzteilrahmen 12 auf, der eine vordere Querstrebe 12a und Seitenstreben 12b umfasst und an seinem der vorderen Querstrebe 12a gegenüberliegenden, hinteren Ende eine Querstrebe 16 aufweist, die gleichzeitig eine gemeinsame Querstrebe mit einem Rückenlehnenrahmen 14 ausbildet, der im Winkel zum Sitzteilrahmen 12 angeordnet ist und gemeinsam mit Seitenstreben 14a und einer oberen Querstrebe 15 eine Rückenlehne 13 ausbildet. Rückenlehnenrahmen 14 und Sitzteilrahmen 12 sind in der dargestellten Gebrauchsstellung fest miteinander verbunden, wobei vorgesehen sein kann, dass der Sitzteilrahmen 12 mit vorderer Querstrebe 12a und Seitenstreben 12b mit der gemeinsamen Querstrebe 16 des Rückenlehnenrahmens 14 durch eine Drehverbindung verbunden ist, so dass der Sitzteilrahmen 12 gegenüber dem Rückenlehnenrahmen 14 hochklappbar ist.

Zur Aufhängung des derart ausgebildeten Sicherheitssitzes 10 in einem Kraftfahrzeug sind an den beiden äußeren Seiten des Sicherheitssitzes 10 jeweils Haltegurte 17 zwischen einer oberen und einer unteren fahrzeugfesten Verankerung 19 aufgespannt, wobei in der Zeichnung beispielhaft nur ein (linker) Haltegurt 17 dargestellt ist. Die fahrzeugseitigen Verankerungen 19 sind als mittels einer Grundplatte an einer Fahrzeugkarosserie zu befestigende Haltebügel ausgebildet, durch die der eine umlaufende Gurtschlinge 18 bildende Haltegurt 17 durchgeschlauft ist. Aufgrund der Ausbildung der Gurtschlinge 18 ergibt sich ein dem Sicherheitssitz zugewandter Vordergurt 20 und ein mit Abstand dazu verlaufender Hintergurt 21. In den Verlauf der Gurtschlinge 18 ist eine Spannvorrichtung 22 eingeschaltet, mittels der in Abhängigkeit von dem fahrzeugbedingt vorgegebenen Abstand zwischen den fahrzeugfesten Verankerungen 19 der betreffende Haltegurt 17 beziehungsweise die Gurtschlinge 18 unter eine entsprechende Vorspannung gesetzt werden kann.

Die Halterung des Sicherheitssitzes 10 an den Gurtschlingen 18 ist nun in besonderer Weise durch den Verlauf von Vordergurt 20 und Hintergurt 21 über die obere Querstrebe 15 und die gemeinsame Querstrebe 16 des Rückenlehnenrahmens 14 verwirklicht, indem Vordergurt 20 beziehungsweise Hintergurt 21 jeweils abwechselnd einmal vor und einmal hinter den jeweiligen Querstreben geführt sind, so dass jede Querstrebe zwischen dem Vordergurt 20 und dem Hintergurt 21 eingeklemmt ist. Durch das Aufbringen einer entsprechenden Vorspannung auf die Haltegurte 17 ergibt sich eine Beklemmung der Querstreben 15 und 16 durch den jeweiligen Vordergurt 20 und Hintergurt 21, so dass aufgrund dieser eingeleiteten Klemmkräfte schon eine ausreichende Festlegung des Sicherheitssitzes 10 an den Haltegurten 17 gegeben ist.

Zur zusätzlichen Fixierung des Sicherheitssitzes dient ein Fanggurt 24, der an einer fahrzeugfesten Verankerung 23 befestigt und mit seinem freien Ende um die obere Querstrebe 15 des Rückenlehnenrahmens 14 geschlungen ist, so dass der Sicherheitssitz 10 an diesem Fanggurt 24 aufgehängt ist. Wiederum ist bei dem dargestellten Ausführungsbeispiel nur der eine (linke) Fanggurt 24 dargestellt; üblicherweise sind ebenso wie zwei Haltegurte 17 auch zwei Fanggurte 24 vorgesehen. Um den Einbau des Gurtsystems mit Sicherheitssitz 10 bei unterschiedlichen Fahrzeugabmessungen zu gewährleisten, weist der Fanggurt 24 eine Verstellvorrichtung 25 zur Einstellung seiner Länge auf.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitssitz (10) für Land-, Luft- und Seefahrzeuge mit wenigstens einem Sitzteil (11), welches an zwei jeweils im Bereich der hinteren Sitzteilkante verlaufenden, vertikalen und fahrzeugseitig befestigbaren Haltegurten (17) festgelegt ist, **dadurch gekennzeichnet; dass** der Sicherheitssitz (10) einen das Sitzteil (11) bildenden Sitzteilrahmen (12) und einen damit verbundenen, im Winkel dazu stehenden und eine Rückenlehne (13) ausbildenden Rückenlehnenrahmen (14) umfasst und jeder Haltegurt (17) als eine zwischen in einem vertikalen Abstand zueinander angeordneten fahrzeugfesten Verankerungen (19) aufspannbare Gurtschlinge (18) mit einem dem Sicherheitssitz (10) zugewandten Vordergurt (20) und einem mit Abstand dazu verlaufenden Hintergurt (21) ausgebildet ist, wobei Vordergurt (20) und Hintergurt (21) jeweils im Wechsel über die obere Querstrebe (15) sowie die im Bereich des Sitzteilrahmens (12) angeordnete untere Querstrebe (16) des Rückenlehnenrahmens (14) geführt sind derart, dass Vordergurt (20) und Hintergurt (21) bei gespannter Gurtschlinge (18) die Querstreben (15, 16) zwischen sich einklemmen, und dass der Rückenlehnenrahmen (14) an wenigstens einem an einer vertikal oberhalb des Sicherheitssitzes (10) angeordneten fahrzeugfesten Verankerung (23) befestigbaren Fanggurt (24) aufgehängt ist.

2. Sicherheitssitz nach Anspruch 1, **dadurch gekennzeichnet, dass** zwei den jeweiligen Haltegurten (17) zugeordnete Fanggurte (24) angeordnet sind.

3. Sicherheitssitz nach Anspruch 1 oder 2, **dadurch gekennzeichnet, dass** wenigstens ein Fanggurt (24) eine Durchführung für den fahrzeugfest anschlagbaren Schultergurt eines sitzseitigen Sicherheitsgurtsystems aufweist.

4. Sicherheitssitz nach Anspruch 1 oder 2, **dadurch gekennzeichnet, dass** bei Ausbildung des sitzseitigen Sicherheitsgurtsystems mit einem Hosenträgergurt beide Fanggurte (24) jeweils eine Durchführung für den zugeordneten Schultergurt des Sicherheitsgurtsystems aufweisen.

5. Sicherheitssitz nach einem der Ansprüche 1 bis 4, **dadurch gekennzeichnet, dass** Sitzteilrahmen (12) und Rückenlehnenrahmen (14) eine gemeinsame Querstrebe (16) aufweisen.

6. Sicherheitssitz nach Anspruch 5, **dadurch gekennzeichnet, dass** der Sitzteilrahmen (12) gegenüber der gemeinsamen Querstrebe (16) schwenkbar angeordnet ist.

7. Sicherheitssitz nach einem der Ansprüche 1 bis 4, **dadurch gekennzeichnet, dass** Sitzteilrahmen (12) und Rückenlehnenrahmen (14) getrennte, parallel und benachbart zueinander ausgerichtete Querstreben aufweisen.

8. Sicherheitssitz nach Anspruch 7, **dadurch gekennzeichnet, dass** Vordergurt (20) und Hintergurt (21) der Gurtschlinge (18) lediglich über die Querstreben des Rückenlehnenrahmens (14) geführt sind.

9. Sicherheitssitz nach Anspruch 7, **dadurch gekennzeichnet, dass** Vordergurt (20) und Hintergurt (21) der Gurtschlinge (18) beide Querstreben von Sitzteilrahmen (12) und Rückenlehnenrahmen (14) zwischen sich einfassen.

10. Sicherheitssitz nach einem der Ansprüche 7 bis 9, **dadurch gekennzeichnet, dass** die hintere Querstrebe des Sitzteilrahmens (12) auf der dem Sitzteil (11) zugewandten Seite der Querstrebe des Rückenlehnenrahmens (14) angeordnet ist.

11. Sicherheitssitz nach einem der Ansprüche 7 bis 9, **dadurch gekennzeichnet, dass** der Sitzteilrahmen (12) über die zugeordnete Querstrebe des Rückenlehnenrahmens (14) hinaus verlängert und die hintere Querstrebe des Sitzteilrahmens (12) auf der dem Sitzteil (11) abgewandten Seite des Rückenlehnenrahmens (14) angeordnet ist.

12. Sicherheitssitz nach Anspruch 11, **dadurch gekennzeichnet, dass** der Sitzteilrahmen (12) über eine Drehverbindung mit der unteren Querstrebe des Rückenlehnenrahmens (14) verbunden ist.

13. Sicherheitssitz nach einem der Ansprüche 1 bis 12, **dadurch gekennzeichnet, dass** jeder Fanggurt (24) mit einer Verstellvorrichtung (25) zur Anpassung der Länge des zwischen der oberen fahrzeugfesten Verankerung (23) und der oberen Querstrebe (15) des Rückenlehnenrahmens (14) verlaufbaren Fanggurtes (24) angeordnet ist.

14. Sicherheitssitz nach einem der Ansprüche 1 bis 13, **dadurch gekennzeichnet, dass** zur Aufbringung einer Vorspannung in den Verlauf jeder Gurtschlinge (18) eine Spannvorrichtung (22) eingeschaltet ist.

## Claims

1. A safety seat (10) for terrestrial vehicles, aircraft and water craft, comprising at least one seat part (11) fixed to two vertical retaining belts (17) affixable on the vehicle side, each retaining belt (17) being routed in the region of the rear seat part edge, **characterised in that** the safety seat (10) comprises a seat part frame (12) that forms the seat part (11) as well as comprising a backrest frame (14) connected to the aforesaid, arranged at an angle to it, and forming a backrest (13), and each retaining belt (17) is designed as a belt loop (18) that can be tensioned between anchoring devices (19) fixed to the vehicle, which anchoring devices (19) are arranged at a vertical distance from each other, with a front belt (20) facing the safety seat (10) and a rear belt (21) that extends at some distance from the aforesaid, wherein the front belt (20) and the rear belt (21) are alternatingly routed by way of the top transverse brace (15) and the bottom transverse brace (16), which is arranged in the region of the seat part frame (12), of the backrest frame (14) in such a manner that when the belt loop (18) is tensioned the front belt (20) and the rear belt (21) clamp the transverse braces (15, 16) between themselves, and **in that** the backrest frame (14) is suspended from at least one restraining belt (24) fastenable to an anchoring device (23) fixed to the vehicle, which anchoring device (23) is arranged vertically above the safety seat (10).

2. The safety seat according to claim 1, **characterised in that** two restraining belts (24) are arranged that are associated with the respective retaining belts (17).

3. The safety seat according to claim 1 or 2, **characterised in that** at least one restraining belt (24) comprises a feed-through device for the shoulder belt, which can be attached so as to be fixed to the vehicle, of a safety belt system on the seat side.

4. The safety seat according to claim 1 or 2, **characterised in that** when the safety belt system on the seat side is constructed with a harness belt, each restraining belt (24) comprises a feed-through device for the associated shoulder belt of the safety belt system.

5. The safety seat according to any one of claims 1 to 4, **characterised in that** the seat part frame (12) and the backrest frame (14) comprise a shared transverse brace (16) .

6. The safety seat according to claim 5, **characterised in that** the seat part frame (12) is pivotably arranged relative to the shared transverse brace (16).

7. The safety seat according to any one of claims 1 to 4, **characterised in that** the seat part frame (12) and the backrest frame (14) comprise separate transverse braces that are aligned parallel and adjacent to each other.

8. The safety seat according to claim 7, **characterised in that** the front belt (20) and the rear belt (21) of the belt loop (18) are routed merely by way of the transverse braces of the backrest frame (14).

9. The safety seat according to claim 7, **characterised in that** the front belt (20) and the rear belt (21) of the belt loop (18) encompass both transverse braces of the seat part frame (12) and the backrest frame (14) between themselves.

10. The safety seat according to any one of claims 7 to 9, **characterised in that** the rear transverse brace of the seat part frame (12) is arranged on the side of the transverse brace of the backrest frame (14), which side faces the seat part (11).

11. The safety seat according to any one of claims 7 to 9, **characterised in that** the seat part frame (12) is extended beyond the associated transverse brace of the backrest frame (14), and the rear transverse brace of the seat part frame (12) is arranged on the side of the backrest frame (14), which side faces away from the seat part (11).

12. The safety seat according to claim 11, **characterised in that** the seat part frame (12) is connected to the bottom transverse brace of the backrest frame (14) by way of a slewing bearing.

13. The safety seat according to any one of claims 1 to 12, **characterised in that** each restraining belt (24) is arranged with an adjustment device (25) for adjusting the length of the restraining belt (24) routable between the upper anchoring device (23) fixed to the vehicle and the upper transverse brace (15) of the backrest frame (14).

14. The safety seat according to any one of claims 1 to 13, **characterised in that** in order to bring about initial tension, a tensioning device (22) is incorporated in the routing of each belt loop (18).

## Revendications

1. Siège de sécurité (10) pour des véhicules terrestres, aériens et marins avec au moins une partie de siège (11) qui est fixée sur deux sangles de maintien (17) verticales, pouvant être fixées côté véhicule et s'étendant respectivement dans la zone de l'arête de partie de siège arrière, **caractérisé en ce que** le siège de sécurité (10) comporte un cadre de partie de siège (12) formant la partie de siège (11) et un cadre de dossier (14) réalisant un dossier (13), se trouvant en angle par rapport à celui-ci et relié à celui-ci et chaque sangle de maintien (17) est réalisée comme une boucle de sangle (18) pouvant être tendue entre des ancrages (19) fixés au véhicule, agencés à une distance verticale les uns des autres avec une sangle avant (20) tournée vers le siège de sécurité (10) et une sangle arrière (21) s'étendant à distance de celle-ci, la sangle avant (20) et la sangle arrière (21) étant guidées respectivement en alternance sur la traverse supérieure (15) ainsi que la traverse inférieure (16) agencée dans la zone du cadre de partie de siège (12) du cadre de dossier (14) de telle manière que la sangle avant (20) et la sangle arrière (21) serrent entre elles les traverses (15, 16) en cas de boucle de sangle serrée (18) et **en ce que** le cadre de dossier (14) est suspendu sur au moins une sangle de retenue (24) pouvant être fixée sur un ancrage (23) fixé au véhicule, agencé verticalement au-dessus du siège de sécurité (10).

2. Siège de sécurité selon la revendication 1, **caractérisé en ce que** deux sangles de retenue (24) associées aux sangles de maintien respectives (17) sont agencées.

3. Siège de sécurité selon la revendication 1 ou 2, **caractérisé en ce qu'**au moins une sangle de retenue (24) présente un passage pour la sangle d'épaule pouvant être posée par fixation au véhicule d'un système de sangle de sécurité côté siège.

4. Siège de sécurité selon la revendication 1 ou 2, **caractérisé en ce que** lors de la réalisation du système de sangle de sécurité côté siège avec un harnais, les deux sangles de retenue (24) présentent respectivement un passage pour la sangle d'épaule associée du système de sangle de sécurité.

5. Siège de sécurité selon l'une quelconque des revendications 1 à 4, **caractérisé en ce que** le cadre de partie de siège (12) et le cadre de dossier (14) présentent une traverse commune (16).

6. Siège de sécurité selon la revendication 5, **caractérisé en ce que** le cadre de partie de siège (12) est agencé de manière pivotante par rapport à la traverse commune (16).

7. Siège de sécurité selon l'une quelconque des revendications 1 à 4, **caractérisé en ce que** le cadre de partie de siège (12) et le cadre de dossier (14) présentent des traverses séparées, orientées parallèlement et de manière contiguë les unes aux autres.

8. Siège de sécurité selon la revendication 7, **caractérisé en ce que** la sangle avant (20) et la sangle arrière (21) de la boucle de sangle (18) sont guidées uniquement sur les traverses du cadre de dossier (14).

9. Siège de sécurité selon la revendication 7, **caractérisé en ce que** la sangle avant (20) et la sangle arrière (21) de la boucle de sangle (18) engagent entre elles les deux traverses du cadre de partie de siège (12) et du cadre de dossier (14).

10. Siège de sécurité selon l'une quelconque des revendications 7 à 9, **caractérisé en ce que** la traverse arrière du cadre de partie de siège (12) est agencée sur le côté tourné vers la partie de siège (11) de la traverse du cadre de dossier (14).

11. Siège de sécurité selon l'une quelconque des revendications 7 à 9, **caractérisé en ce que** le cadre de partie de siège (12) est prolongé au-delà de la traverse associée du cadre de dossier (14) et la traverse arrière du cadre de partie de siège (12) est agencée sur le côté éloigné de la partie de siège (11) du cadre de dossier (14).

12. Siège de sécurité selon la revendication 11, **caractérisé en ce que** le cadre de partie de siège (12) est relié par une liaison rotative à la traverse inférieure du cadre de dossier (14).

13. Siège de sécurité selon l'une quelconque des revendications 1 à 12, **caractérisé en ce que** chaque sangle de retenue (24) est agencée avec un dispositif de réglage (25) pour l'adaptation de la longueur de la sangle de retenue (24) pouvant s'étendre entre l'ancrage supérieur fixé au véhicule (23) et la traverse supérieure (15) du cadre de dossier (14).

14. Siège de sécurité selon l'une quelconque des revendications 1 à 13, **caractérisé en ce qu'**un dispositif de serrage (22) est inséré pour l'application d'une précontrainte dans le passage de chaque boucle de sangle (18).
